# DEMANDE DE BREVET EUROPEEN

(11) **EP 4 819 299 A1**
(43) Date de publication de la demande: **07.10.2026**
(21) Numéro de dépôt: 26161880.5
(22) Date de dépôt: 03.03.2026
(51) Int. Cl.: H01M 10/613, H01M 10/643, H01M 10/6557, H01M 50/213, H01M 50/291, H01M 50/293, H01M 10/653, H01M 10/658

(54) **MODULE DE BATTERIE ÉLECTROCHIMIQUE AVEC DISPOSITIF DE REFROIDISSEMENT ET PROCÉDÉ D'ASSEMBLAGE CORRESPONDANT**

(30) Priorité: 04.04.2025 FR 2503550
(71) Demandeur: ALSTOM Transport SA, 93400 St-Ouen sur Seine (FR)
(72) Inventeur: TAINE, Antoine, 65600 SEMEAC (FR); BOURDERIOUX, Benoit, 65360 VIELLE-ADOUR (FR)
(74) Mandataire: Plasseraud IP

(57) **Abrégé**

La présente invention concerne un module de batterie électrochimique (10) comprenant une pluralité de cellules électrochimiques (20) cylindriques disposées dans un boîtier (15) de manière à former au moins une rangée de cellules (25), un dispositif de refroidissement (30), et au moins un intercalaire de maintien (35) des cellules électrochimiques (20) . Au moins une rangée de cellules (25) est placée entre un élément longitudinal de refroidissement (45) respectif du dispositif de refroidissement (30) et un intercalaire de maintien (35) respectif. L'intercalaire de maintien (35) comprend une pluralité d'ailettes (50) s'étendant entre deux cellules électrochimiques (20), chaque ailette (50) présentant une portion inférieure (51) s'étendant en formant un biseau selon une direction d'élévation entre une base inférieure (55) qui n'est pas en contact avec les cellules électrochimiques (20) ret une portion supérieure (52) en contact de part et d'autre avec les cellules électrochimiques (20) respectives.

## Description

La présente invention concerne un module de batterie électrochimique comprenant un dispositif de refroidissement et un procédé d'assemblage d'un tel module.

Les batteries électrochimiques sont constituées d'un ou plusieurs modules de batteries, le cas échéant connectés électriquement entre eux.

Chaque module de batterie comprend une pluralité de cellules électrochimiques, en général cylindriques, connectées en série et/ou en parallèles et maintenues sous forme d'assemblage plus ou moins compact dans un boîtier.

Dans de nombreux cas d'usage des batteries électrochimiques, notamment dans les domaines ferroviaire, aéronautique et automobile, l'échauffement des cellules électrochimiques lorsque la batterie débite un courant électrique nécessite l'implémentation d'un dispositif de refroidissement des cellules électrochimiques de chaque module.

Simultanément, du fait des sollicitations mécaniques importantes des dispositifs équipés de batteries, par exemple lorsque ces dispositifs sont des véhicules ferroviaires, automobiles, marins ou des aéronefs, il est nécessaire d'assurer un maintien en place suffisamment ferme des cellules électrochimiques dans le boîtier.

La combinaison des exigences de densité énergétique, imposant un refroidissement approprié des cellules électrochimiques, de compacité et de sécurité, notamment de résistance aux chocs et au feu, rend la conception des modules de batteries particulièrement complexe.

Différents systèmes de refroidissement des cellules électrochimiques des modules de batterie ont été proposés.

Notamment, le dispositif de refroidissement peut se présenter sous la forme d'un serpentin souple à intercaler entre les rangées successives de cellules électrochimiques. Dans ce cas, le maintien mécanique des cellules électrochimiques est assurée par une mousse polymère expansive dans laquelle sont noyées les cellules électrochimiques et le dispositif de refroidissement mécanique, selon le procédé désigné par le terme anglais « potting ».

Cette solution ne permet pas le remplacement d'une cellule électrochimique donnée ou de tout ou partie du dispositif de refroidissement pour la maintenance du module de batterie.

La présence de la mousse de remplissage rend en outre difficile le recyclage du module de batterie en fin de vie.

Des dispositifs de refroidissement comprenant des plaques de refroidissement liquide gonflables ont aussi été proposés. Le maintien mécanique des cellules électrochimiques est dans ce cas assuré uniquement lorsque la plaque est en position gonflé, du fait de son remplissage par le liquide de refroidissement.

De tels dispositifs permettent d'éviter de recourir à un matériau de remplissage type mousse, mais leur résistance mécanique reste limitée du fait du caractère intrinsèquement souple de la paroi des plaques.

De plus l'assemblage de ces dispositifs est relativement fastidieux et les batteries ne peuvent être transportées qu'une fois les plaques gonflées donc en présence du liquide refroidissement sous pression.

Enfin, de tels dispositifs de refroidissement ne permettent pas d'assurer une protection contre la propagation d'un éventuel incendie, requise dans de nombreux cas d'utilisation de la batterie.

Un but de l'invention est donc de proposer un module de batterie électrochimique comprenant un dispositif de refroidissement, ce module de batterie présentant une très bonne résistance mécanique simultanément avec des performances de refroidissement des différentes cellules satisfaisantes, ainsi que si possible une bonne résistance au feu, l'assemblage du module ainsi que son transport, sa maintenance et son recyclage étant en outre aisés.

A cet effet, l'invention a pour objet un module de batterie électrochimique comprenant :
- un boîtier,
- une pluralité de cellules électrochimiques cylindriques s'étendant chacune selon une direction d'élévation entre deux bases opposées, les cellules électrochimiques étant disposées dans le boîtier de manière à former au moins une rangée de cellules s'étendant suivant une direction longitudinale perpendiculaire à la direction d'élévation,
- un dispositif de refroidissement des cellules électrochimiques, et
- au moins un intercalaire de maintien des cellules électrochimiques s'étendant selon la direction longitudinale et la direction d'élévation,
au moins une rangée de cellules étant placée selon une direction transversale perpendiculaire à la direction d'élévation entre :
- un élément longitudinal de refroidissement respectif du dispositif de refroidissement, et
- un desdits au moins un intercalaire de maintien respectif, placé en contact avec chacune des cellules électrochimiques respectives de la rangée de cellules, de manière à maintenir chacune de ces cellules en contact avec l'élément longitudinal de refroidissement respectif, ledit intercalaire de maintien comprenant pour chaque rangée de cellules respective une pluralité d'ailettes s'étendant chacune selon la direction transversale entre deux cellules électrochimiques respectives de la rangée de cellules, chaque ailette présentant selon la direction d'élévation une portion inférieure s'étendant en formant un biseau selon la direction d'élévation entre une base inférieure de l'ailette qui n'est pas en contact avec les cellules électrochimiques respectives et une portion supérieure de l'ailette en contact de part et d'autre avec les cellules électrochimiques respectives.

L'intercalaire de maintien permet un maintien mécanique satisfaisant des cellules électrochimiques par pression, compatible avec tout type de dispositif de refroidissement, notamment des dispositifs de refroidissement non gonflables, et ce sans qu'il ne soit nécessaire de recourir à un matériau de remplissage de type mousse.

La forme en biseau des ailettes de l'intercalaire de maintien permet en particulier un assemblage du module de batterie électrochimique particulièrement simple, y compris lorsque le ou les éléments longitudinaux de refroidissement sont solidaires du boîtier.

Notamment, pour l'assemblage du module de batterie, les cellules électrochimiques peuvent être positionnées dans le boîtier en rangées de manière à ce que chacune des rangées de cellules soit en contact lâche, ou autrement dit avec jeu, avec un élément longitudinal de refroidissement respectif, éventuellement solidaire du boîtier.

Le ou les intercalaires de maintien sont alors insérés par translation selon la direction d'élevation, de manière à ce que chaque rangée soit en contact serré, ou autrement dit sans jeu, selon la direction transversale d'une part avec un élément de longitudinal de refroidissement respectif et d'autre part avec un intercalaire de maintien respectif.

La translation selon la direction transversale et l'obtention d'un contact serré sont rendues possibles par la forme en biseau de la portion inférieure des ailettes, qui permet d'utiliser une portion supérieure dont la forme est adaptée à celle des cellules électrochimiques et peut être réalisée avec une tolérance suffisamment faible pour assurer le contact sans jeu.

En outre, cette facilité d'assemblage permet de former l'intercalaire de maintien dans un matériau configuré pour limiter la propagation du feu d'une rangée de cellule à une autre.

De plus, comme il n'est pas nécessaire d'ajouter un matériau de remplissage pour assurer le maintien en place des cellules électrochimiques, le démontage de ce module pour entretien, remplacement d'une cellule électrochimique défaillante ou remplacement d'un élément particulier du dispositif de refroidissement est aisé.

Suivant d'autres aspects avantageux de l'invention, le module de batterie électrochimique comprend une ou plusieurs des caractéristiques suivantes, prises isolément ou suivant toutes les combinaisons techniquement possibles :
- chaque rangée de cellules est placée entre un élément longitudinal de refroidissement respectif du dispositif de refroidissement et un intercalaire de maintien respectif ;
- les ailettes s'étendent chacune selon la direction d'élévation sur une hauteur au moins égale à la moitié d'une hauteur des cellules électrochimiques respectives selon cette direction ;
- ledit intercalaire de maintien comprend au moins un élément de positionnement apte à coulisser selon la direction d'élévation relativement à un élément de positionnement complémentaire formé sur une paroi du boîtier ;
- ledit intercalaire de maintien est fixé de manière amovible sur chacune de deux parois du boîtier opposées selon la direction longitudinale ;
- ledit intercalaire de maintien est formé dans un matériau isolant électrique, et optionnellement isolant thermique ;
- le dispositif de refroidissement est configuré pour permettre la circulation d'un liquide de refroidissement ;
- le dispositif de refroidissement comprend une entrée de fluide de refroidissement et une sortie de fluide refroidissement pour l'alimentation de l'ensemble des éléments longitudinaux de refroidissement en liquide de refroidissement ;
- chaque élément longitudinal de refroidissement est solidaire du boîtier.

L'invention concerne également un procédé d'assemblage d'un module de batterie électrochimique tel que décrit précédemment comprenant :
a) la fourniture du boîtier définissant un volume de réception des cellules électrochimiques entre des parois inférieure et latérale ;
b) le positionnement du ou des éléments longitudinaux de refroidissement dans le volume de réception du boîtier selon la direction longitudinale;
c) l'insertion des cellules électrochimiques de manière à former la ou les rangées de cellules, chaque rangée étant formée le long d'un élément longitudinal de refroidissement respectif avec un jeu selon la direction transversale ;
d) le positionnement du ou des intercalaires de maintien par translation selon la direction d'élévation, de façon à ce que ledit jeu soit supprimé à l'issue de cette translation ;
e) le blocage du ou des intercalaires de maintien en translation selon la direction d'élévation relativement au boîtier.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en perspective d'un module de batterie électrochimique selon un mode de réalisation de l'invention, couvercle ouvert ;
[Fig. 2] la figure 2 est une vue de dessus d'un module de batterie de l'art antérieur en cours d'assemblage ;
[Fig. 3] la figure 3 est une vue de dessus partielle d'un module de batterie similaire à celui de la figure 1, en cours d'assemblage selon un mode de réalisation du procédé d'assemblage selon l'invention, avant positionnement de tout intercalaire de maintien ;
[Fig. 4] la figure 4 est une vue de dessus du module de batterie de la figure 3 à une étape ultérieure du procédé d'assemblage selon l'invention, après positionnement d'une partie des intercalaires de maintien ;
[Fig. 5] la figure 5 est une vue en perspective d'une partie du module de batterie de la figure 4 au début du positionnement d'un nouvel intercalaire de maintien ;
[Fig. 6] la figure 6 est une vue en perspective d'une partie du module de batterie de la figure 5, une fois le nouvel intercalaire de maintien partiellement positionné dans le volume de réception du boîtier ;
[Fig. 7] la figure 7 est une vue de dessus du module de batterie de la figure 3 une fois assemblé, sans couvercle ;
[Fig. 8] la figure 8 est une vue d'une portion de l'intercalaire de maintien qui a été positionné lors de l'étape d'assemblage représentée sur les figures 5 et 6 de côté (partie A), de dessus (partie B) et de dessous (partie C) ;
[Fig. 9] la figure 9 est une vue en perspective de l'intercalaire de maintien le plus haut sur la figure 4 ;
[Fig. 10] la figure 10 est une vue en perspective d'un mode de réalisation d'une portion de paroi latérale du boîtier du module de batterie de la figure 1 ; et
[Fig. 11] la figure 11 est une représentation sous forme de logigramme d'un procédé d'assemblage du module de batterie de la figure 1.

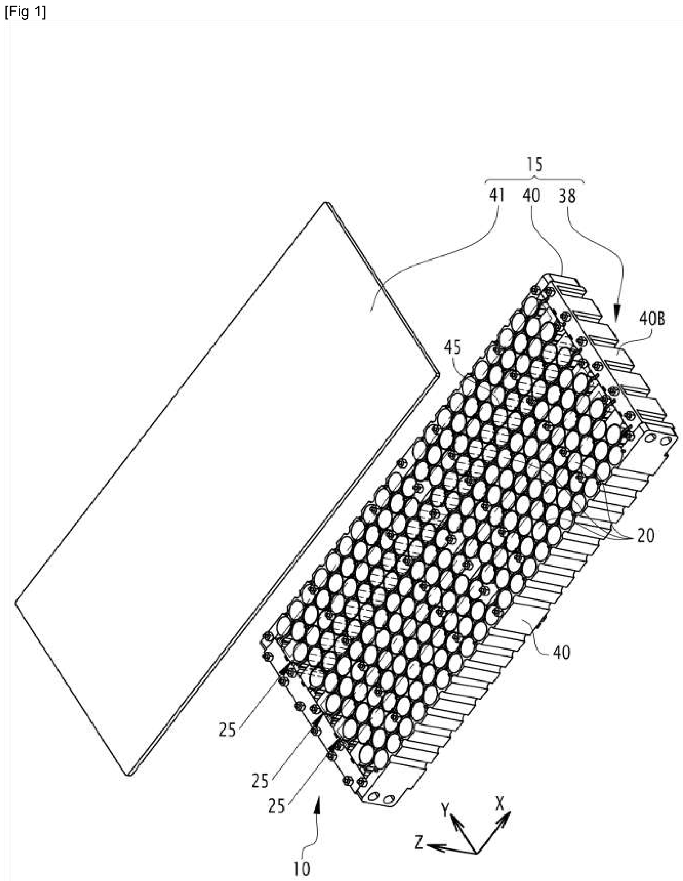

L'invention porte sur un module de batterie électrochimique 10, décrit en référence à la figure 1.

Le module de batterie électrochimique 10 est configuré pour une mise en œuvre dans une batterie électrochimique (non représentée), seul ou en association avec au moins un autre module de batterie électrochimique, par exemple au moins un autre module de batterie électrochimique 10 selon l'invention.

La batterie électrochimique est par exemple destinée à être utilisée dans un véhicule terrestre, marin, ou aérien, en particulier pour alimenter un moteur d'un tel véhicule.

Le module de batterie électrochimique 10 comprend un boîtier 15 dans lequel sont disposées une pluralité de cellules électrochimiques 20 cylindriques de manière à former au moins une rangée 25 de cellules s'étendant suivant une direction longitudinale X, un dispositif de refroidissement 30 des cellules électrochimiques 20, et au moins un intercalaire de maintien 35 des cellules électrochimiques 20.

Les cellules électrochimiques 20 sont par exemple des cellules de type Li-ion.

Les cellules électrochimiques 20 sont cylindriques.

Chaque cellule électrochimique 20 s'étend ainsi entre une base inférieure et une base supérieure 20A selon un axe de cylindre respectif.

Les bases inférieure et supérieure 20A ont par exemple de la forme d'un disque.

Le boîtier 15 comprend une paroi inférieure 38, une paroi latérale 40 s'étendant selon une direction d'élévation Z perpendiculaire à la direction longitudinale X à partir de la paroi inférieure 35, et optionnellement un couvercle 41, avantageusement amovible.

La paroi latérale 40 et/ou la paroi inférieure 38 est une paroi pleine ou discontinue.

Les parois latérale 40 et inférieure 38 délimitent un volume de réception des cellules électrochimiques 20, du ou des intercalaire(s) de maintien 35 et du dispositif de refroidissement 30.

Les cellules électrochimiques 20 sont disposées dans le volume de réception de manière à ce que les axes de cylindre respectifs soient parallèles à la direction d'élévation Z, et de manière à former au moins une rangée 25.

Le module de batterie électrochimique 10 comprend dans un mode de réalisation particulier une pluralité de rangées 25, de préférence parallèles entre elles, comme visible sur l'exemple de la figure 1.

Dans la suite de la description, chaque rangée 25, lorsqu'elle doit être désignée de manière individualisée, est associée à un indice i compris entre 1 et n, n étant le nombre total de rangées.

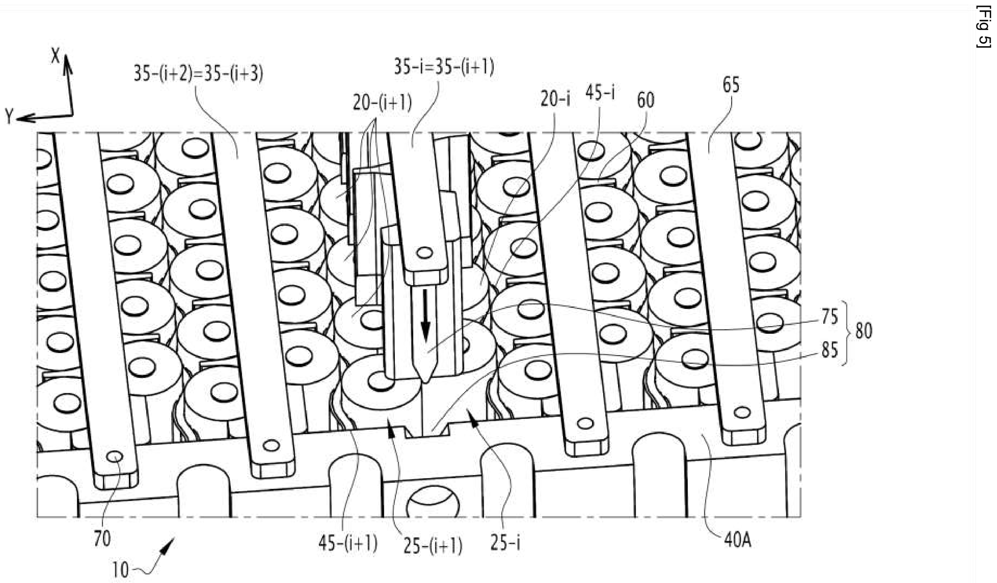

Une rangée 25 particulière est donc repérée dans la suite par un signe de référence de la forme 25-i, avec i un entier compris entre 1 et n, l'indice i étant utilisée pour tous les éléments en rapport avec cette rangée particulière. Par exemple, les cellules électrochimiques 20 de la rangée 25- i, i étant un entier quelconque compris entre 1 et n, sont désignées par le signe de référence 20-i, comme visible sur l'exemple de la figure 5.

En fonction de la forme des bases inférieure supérieure 20A, les cellules électrochimiques 20-i d'une rangée 25-i donnée peuvent être décalées ou non par rapport aux cellules électrochimiques 20 d'une rangée 25-(i+1) ou 25-(i-1) voisine selon la direction longitudinale X, en particulier de manière à assurer un assemblage le plus compact possible des cellules électrochimiques 20.

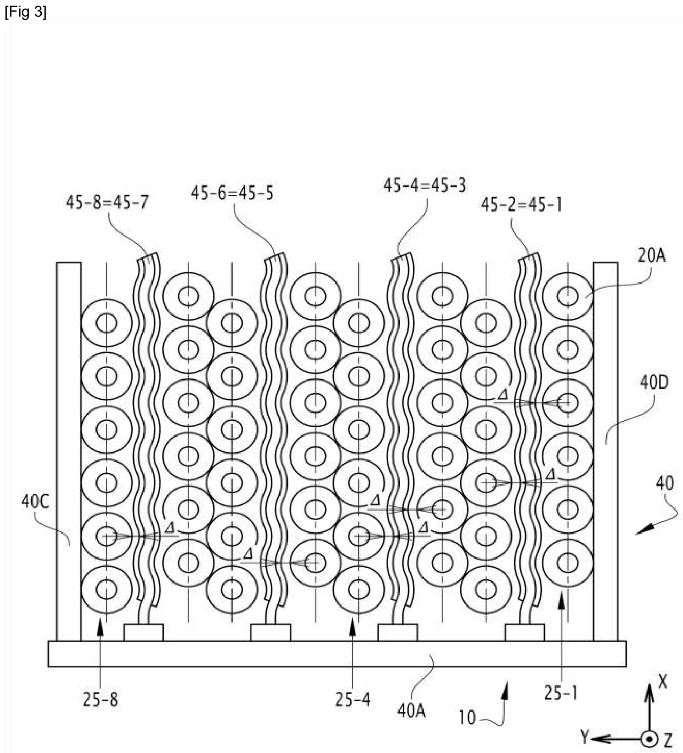

Dans l'exemple représenté sur les figures 1 et 3 à 7, les cellules électrochimiques 20 sont positionnées dans le boîtier 15 selon une géométrie de type nid d'abeille, et forment ainsi n rangées 25, avec n égal à 8 pour la figure 3.

Au moins une rangée 25-i de cellules électrochimiques 20, i étant un entier quelconque compris entre 1 et n, est placée selon une direction transversale Y perpendiculaire à la direction d'élévation Z entre :
- un élément longitudinal de refroidissement 45-i respectif du dispositif de refroidissement 30, et
- un intercalaire de maintien 35-i respectif s'étendant selon la direction longitudinale X et selon la direction transversale Y, placé en contact avec chacune des cellules électrochimiques 20-i respectives, de la rangée de cellules, de manière à maintenir chacune de ces cellules en contact avec l'élément longitudinal de refroidissement respectif 45-i.

Dans les exemples, la direction transversale Y est perpendiculaire à la direction longitudinale X.

Dans un mode de réalisation particulier, chaque rangée 25-i de cellules électrochimiques 20, pour i compris entre 1 et n, est placée entre un élément longitudinal de refroidissement respectif 45-i du dispositif de refroidissement 30 et un intercalaire de maintien respectif 35-i.

Le dispositif de refroidissement 30 est configuré pour permettre de refroidir si nécessaire les cellules électrochimiques 20 lorsque le module de batterie débite un courant électrique.

A cette fin, le dispositif de refroidissement 30 comprend le ou les éléments longitudinaux de refroidissement 45, s'étendant chacun selon la direction longitudinale X.

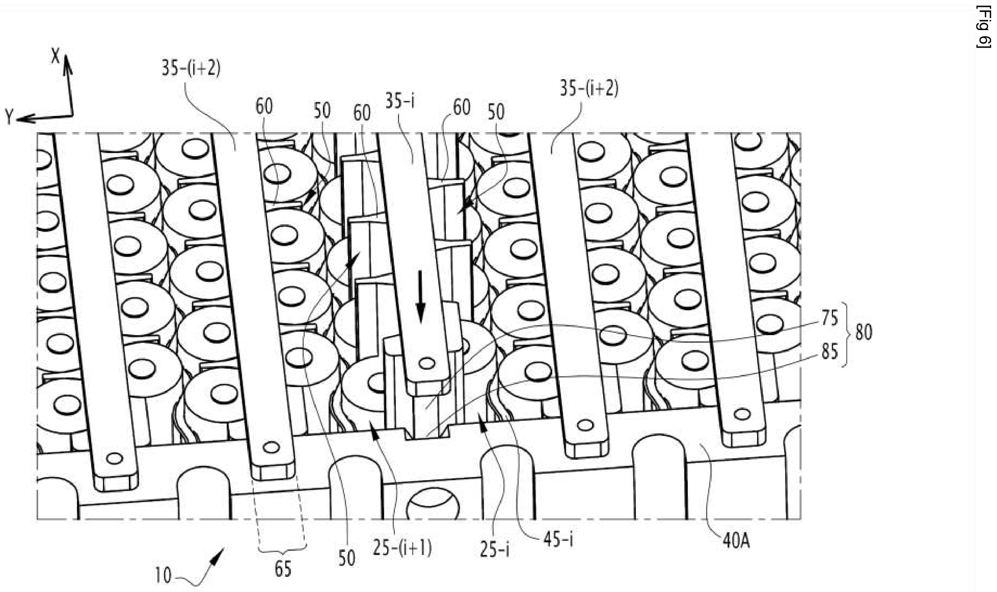

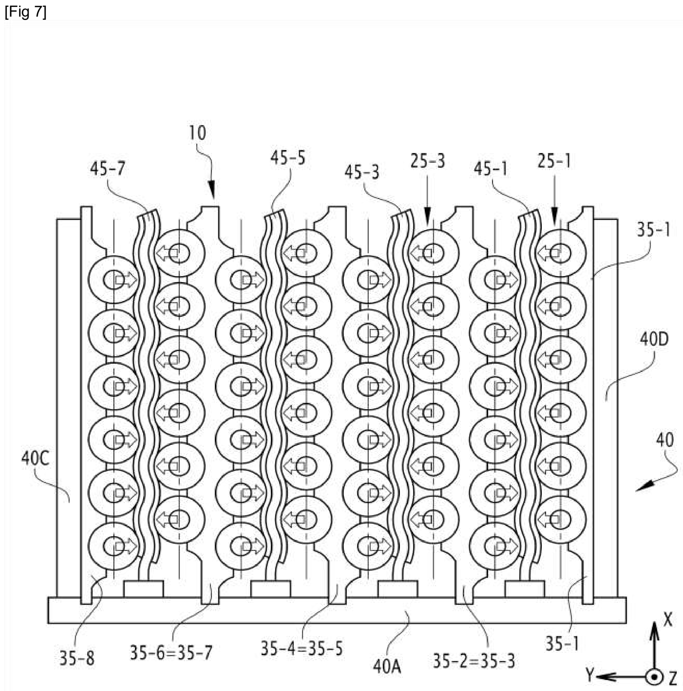

Au moins une rangée 25-i, de préférence chaque rangée 25-i, est en contact avec un élément longitudinal de refroidissement 45-i respectif au niveau de chacune de ses cellules électrochimiques 20-i dans le module de batterie 10 assemblé, comme visible sur les figures 6 et 7.

Un élément longitudinal de refroidissement 45-i donné peut être intercalé selon la direction transversale Y entre deux rangées 25-i et 25-(i+1) ou 25-i et 25-(i-1) successives et donc être commun à ces deux rangées. Comme visible sur la figure 3, l'élément longitudinal de refroidissement 45-1 de la rangée 25-1 est aussi l'élément longitudinal de refroidissement 45-2 de la rangée 25-2, l'élément longitudinal de refroidissement 45-3 de la rangée 25-3 est aussi l'élément longitudinal de refroidissement 45-4 de la rangée 25-4, etc.

Dans un mode de réalisation particulier, l'élément longitudinal de refroidissement 45-i présente un profil dans un plan transversal XY perpendiculaire à la direction d'élévation Z une forme partiellement complémentaire de celle des bases inférieure et supérieure 20A des cellules électrochimiques 20-i respectives, de manière à former un logement respectif pour chacune des cellules électrochimiques 20-i.

Dans le cas de bases inférieure et supérieure 20A discoïdales, le profil du dispositif de refroidissement 30 est ainsi par exemple ondulé, comme visible sur les figures 3 à 7.

Cette disposition permet d'obtenir une surface d'échange thermique particulièrement grande entre la rangée 25-i et l'élément longitudinal de refroidissement 45-i respectif.

Dans un mode de réalisation particulier, le ou les éléments longitudinaux de refroidissement 45 sont solidaires du boîtier 15, notamment de la paroi latérale 40.

Le ou les éléments longitudinaux de refroidissement 45-i sont par exemple soudés à chacune de leurs extrémités selon la direction longitudinale X à la paroi latérale 40 du boîtier 15, au niveau de deux portions transversales 40A et 40B de la paroi latérale 40 opposées selon la direction longitudinale X. Ce cas de figure est notamment représenté sur les figures 1, 3 et 7.

Cette disposition permet un assemblage particulièrement aisé du module de batterie 10 et un excellent maintien en place des cellules électrochimiques 20 comme cela sera expliqué par la suite.

Dans un mode de réalisation particulier, l'entraxe a séparant deux éléments longitudinaux de refroidissement 45-i et 45-(i+1) successifs quelconques solidaires du boîtier 15 est constant, comme représenté sur la figure 3.

Dans un mode de réalisation particulier, le dispositif de refroidissement 30 est un dispositif de refroidissement liquide, au travers duquel peut circuler un liquide de refroidissement.

Dans ce cas, une partie de la paroi latérale 40 peut constituer une partie du dispositif de refroidissement 30, notamment une nourrice de liquide de refroidissement.

Par exemple, les deux portions transversales 40A et 40B de la paroi latérale 40 opposées selon la direction longitudinale X comportent chacune un volume intérieur de réception de liquide de refroidissement. Ce cas de figure est notamment représenté sur les figures 3 et 7.

La circulation du liquide de refroidissement est assurée au moyen d'une pompe (non représentée) au travers de chacun des éléments longitudinaux de refroidissement 45-i, avec i compris entre 1 et n, et le cas échéant au travers des volumes intérieurs des deux portions 40A et 40B de la paroi latérale 40, entre au moins une entrée de fluide et au moins une sortie de fluide du dispositif de refroidissement 30.

Avantageusement, le dispositif de refroidissement 30 comprend une unique entrée de fluide et une unique sortie de fluide pour l'alimentation de l'ensemble des éléments longitudinaux de refroidissement 45-i, avec i compris entre 1 et n, en liquide de refroidissement.

Le contact entre les cellules électrochimiques 20-i respective de la rangée 25-i et l'élément longitudinal de refroidissement 45-i respectif est assuré au moyen de l'intercalaire de maintien respectif 35-i.

Dans un mode de réalisation particulier, les éléments longitudinaux de refroidissement 45 sont formés dans un matériau rigide, ou en d'autres termes, qui n'est pas destiné à se déformer lors du remplissage de ces éléments longitudinaux de refroidissement 45 avec le liquide de refroidissement.

De manière optionnelle, les éléments longitudinaux de refroidissement 45 sont formées dans un matériau isolant électrique.

De manière optionnelle, les éléments longitudinaux de refroidissement 45 comprennent une ou plusieurs couches de tampon thermique 46 (en anglais, « thermal gap pad ») autour du matériau rigide.

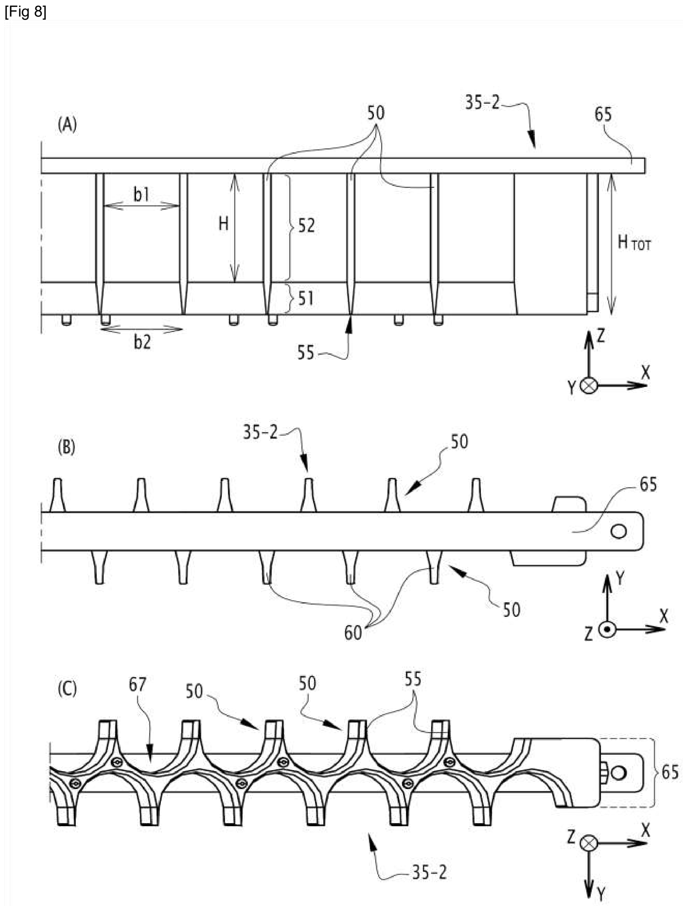

Le ou les intercalaire(s) de maintien 35 s'étend(ent) selon la direction longitudinale X et selon la direction d'élévation Z, comme visible sur la figure 8A.

Dans le module de batterie 10 assemblé, un intercalaire de maintien 35-i donné est au contact d'au moins une rangée 25-i respective, et éventuellement de deux rangées 25-i et 25-(i+1) ou 25-i et 25(i-1) voisines.

En d'autre termes, un intercalaire de maintien 35-i donné peut être dédié seulement à la rangée 25-i, constituant ainsi un intercalaire de maintien dit « d'extrémité », ou être commun à deux rangées 25-i et 25-(i+1) ou 25-i et 25(i-1) voisines, constituant ainsi un intercalaire de maintien dit « intermédiaire ».

Comme visible sur la figure 5, l'intercalaire de maintien 35-i de la rangée 25-i est aussi l'intercalaire de maintien 35-(i+1) de la rangée 35-(i+1), l'intercalaire de maintien 35-(i+2) de la rangée 25-(i+2) est aussi l'intercalaire de maintien 35-(i+3) de la rangée 35-(i+1), etc., ces intercalaires de maintien étant donc des intercalaires de maintien intermédiaires.

Dans l'exemple de la figure 7, les intercalaires de maintien 35-1 et 35-8 sont dédiés uniquement respectivement à la rangée 25-1 et à la rangée 25-8 et sont donc des intercalaires de maintien d'extrémité. Les intercalaires de maintien 35-2 = 35-3, 35-4 = 35-5 et 35-6 = 35-7 sont quant à eux des intercalaires de maintien intermédiaire
Un intercalaire de maintien 35-i d'extrémité donné est interposé selon la direction transversale Y entre la paroi latérale 40, en particulier une portion longitudinale 40C, 40D de la paroi latérale 40 s'étendant selon la direction longitudinale X, et la rangée 25-i respective.

L'intercalaire de maintien 35-i comprend pour chaque rangée 25-i respective une pluralité d'ailettes 50 s'étendant chacune selon la direction transversale Y entre deux cellules électrochimiques 20-i respective de la rangée 25-i. Chaque ailette 50 présente selon la direction d'élévation Z une portion inférieure 51 s'étendant en formant un biseau selon la direction d'élévation Z entre :
- une base inférieure 55 de l'ailette 50 qui n'est pas en contact avec les cellules électrochimiques 20-i respectives, et
- une portion supérieure 52 de l'ailette, qui est en contact de part et d'autre avec les cellules électrochimiques 20-i respectives.

La portion supérieure 52 s'étend selon la direction d'élévation Z du côté opposé à la portion inférieure 51 jusqu'à une base supérieure 60 de l'ailette 50.

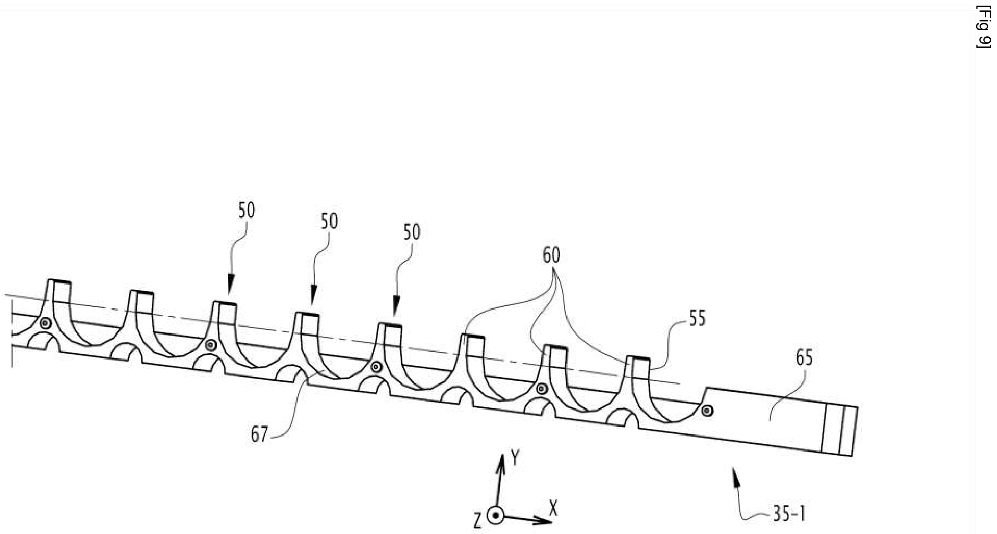

Les ailettes 50 s'étendent donc selon la direction transversale Y à partir d'une âme 65 de l'intercalaire de maintien 35-i d'un seul côté dans le cas d'un intercalaire de maintien d'extrémité, comme visible sur l'exemple de la figure 9, ou des deux côtés de l'âme 65 dans le cas d'un intercalaire de maintien 35-i intermédiaire, comme visible sur l'exemple de la figure 8.

La largeur, prise selon la direction longitudinale X, de la section d'une ailette 50 quelconque selon un plan XZ augmente donc lorsqu'on se déplace dans la portion inférieure 51 selon la direction d'élévation Z depuis la base inférieure 55 jusqu'à la portion supérieure 52.

La portion supérieure 52 d'une ailette 50 quelconque a quant à elle une section selon le plan XZ de largeur, prise selon la direction longitudinale X, constante sur au moins une partie, de préférence toute, sa hauteur H suivant la direction d'élévation Z.

En d'autres termes, l'entraxe b1 selon la direction longitudinale X entre deux ailettes 50 voisines est constant sur au moins une partie, de préférence toute, la hauteur H de la portion supérieure 52 suivant la direction d'élévation Z et cet entraxe b1 est plus grand que l'entraxe b2 selon la direction longitudinale X entre ces deux ailettes 50 mesuré au niveau de la base inférieure 55.

Cette disposition permet l'assemblage aisé du module de batterie 10, par exemple par le procédé d'assemblage selon l'invention qui sera décrit plus loin, y compris lorsque les éléments longitudinaux de refroidissement 45-i sont solidaires du boîtier 15, et ce grâce à la forme en biseau de la portion inférieure 51.

La portion supérieure 52 assure quant à elle un maintien possiblement sans jeu des cellules électrochimiques 20-i respectives une fois l'intercalaire de maintien 45-i en place, en combinaison avec l'élément longitudinal de refroidissement 45-i. Le contact des cellules électrochimiques 20-i avec l'élément longitudinal de refroidissement 45-i, assuré grâce à la portion supérieure 52 des ailettes 50 permet le maintien mécanique des cellules électrochimiques 20-i et, simultanément, que la fonction de refroidissement 45-i soit correctement assurée.

Les flèches en gras de direction la direction transversale Y sur la figure 7 montrent comment les contacts mécaniques sont réalisés une fois les intercalaires de maintien 45 en place.

On comprend que grâce à l'intercalaire de maintien 45 selon l'invention, aucune mousse de remplissage n'est nécessaire pour assurer le maintien en place des cellules électrochimiques 20 dans le boîtier 15.

Le module de batterie 10 est donc de préférence dépourvue de matériau de remplissage des espaces laissés vides par les éléments du module de batterie 10 décrits précédemment.

Dans un mode de réalisation particulier, une ailette 50 quelconque s'étend sur une hauteur totale H_{TOT} selon la direction d'élévation Z au moins égale à la moitié d'une hauteur des cellules électrochimiques 20-i respectives selon cette direction, voire au moins égale au deux-tiers de cette hauteur.

Dans un mode de réalisation particulier, la portion supérieure 52 d'une ailette 50 quelconque s'étend sur au moins la moitié, voire au moins les deux-tiers de la hauteur totale H_{TOT} de l'ailette 50.

Dans un mode de réalisation particulier, l'âme 65 d'une ailette 50 a un profil dans un plan transversal XY choisi en fonction de la forme des cellules électrochimiques 20-i respectives.

L'âme 65 peut ainsi définir entre deux ailettes successives 50 un logement 67 de réception d'une cellule électrochimique 20 respective, le logement ayant une forme partiellement complémentaire de la forme de la cellule électrochimique 20 sur au moins une partie de la hauteur H de la portion supérieure 52 des ailettes 50 qui le bordent, comme visible sur la figure 8 partie C et sur la figure 9.

Cette disposition permet un maintien mécanique des cellules électrochimiques 20 particulièrement précis.

L'intercalaire de maintien 35 est avantageusement formé dans un matériau isolant électrique.

L'intercalaire de maintien 35 est avantageusement formé dans un matériau ignifugé. Cette disposition permet d'améliorer la résistance au feu de la batterie en créant une barrière résistante au feu entre deux rangées 25 situées de part et d'autre de l'intercalaire de maintien 35 selon la direction transversale Y.

L'intercalaire de maintien 35 est par exemple formé dans un matériau plastique, notamment une résine de type SMC (en anglais, « Sheet Moulding Compound »), par exemple par moulage ou impression 3D.

Dans un mode de réalisation particulier, l'intercalaire de maintien 35 comprend un dispositif de fixation amovible 70, par exemple des vis, pour la liaison réversible de l'intercalaire de maintien 35 au boîtier 15, par exemple à la paroi latérale 40.

Cette disposition permet d'assurer un maintien mécanique des cellules électrochimiques 20 particulièrement précis.

Alternativement ou en complément, le ou les intercalaires de maintien 35 sont bloqués en translation selon la direction d'élévation Z dans le boîtier 15 par l'éventuel couvercle 41.

Dans un mode de réalisation particulier, l'intercalaire de maintien 35 comprend à l'une ou à chacune de ses extrémités selon la direction longitudinale X un dispositif d'aide au positionnement 75 dans le boîtier 15.

Le dispositif d'aide au positionnement 75 est par exemple l'une d'une partie mâle et d'une partie femelle d'une glissière 80 d'axe l'axe d'élévation Z, l'autre 85 des parties mâle et femelle de la glissière 80 étant formée sur la paroi latérale 40 du boîtier 15 du côté du volume de réception des cellules électrochimiques 20, comme représenté sur la figure 5.

Le dispositif d'aide au positionnement 75 présente avantageusement une portion inférieure biseautée 90, facilitant encore la mise en place de l'intercalaire de maintien 15.

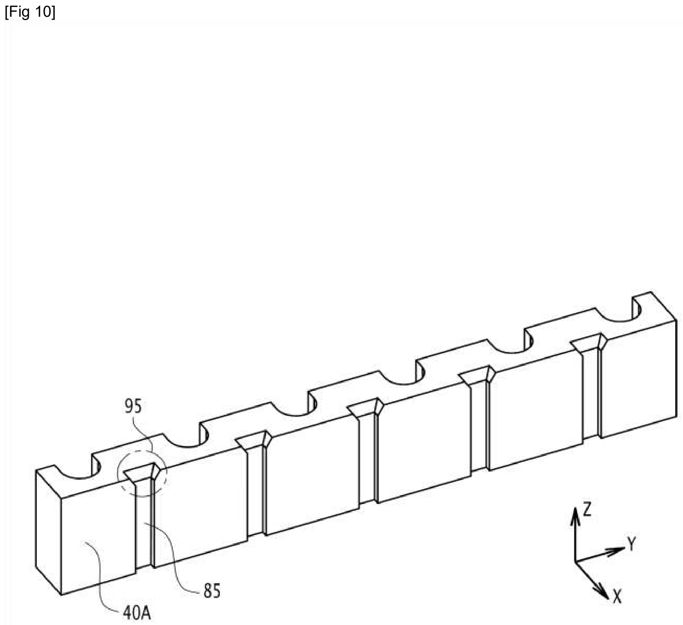

L'autre 85 des parties mâle et femelle de la glissière 80, formée sur la paroi latérale 40 du boîtier 15 présente avantageusement une portion supérieure 95 biseautée, comme représenté sur les figures 5, 6 et 10.

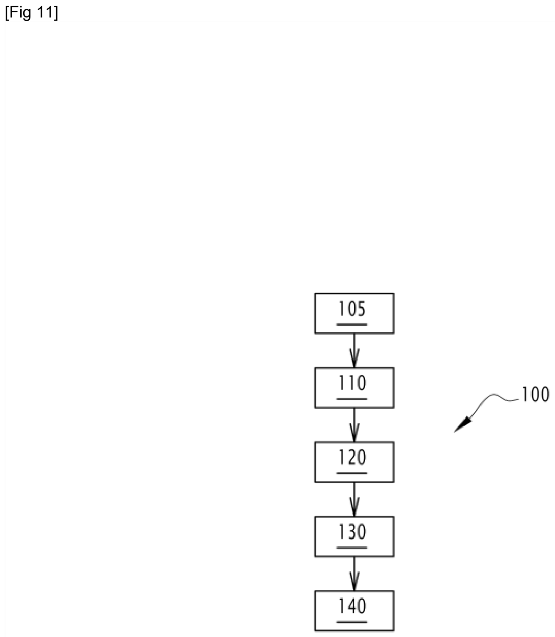

On va maintenant décrire un procédé d'assemblage 100 du module de batterie 10 selon l'invention en référence aux figures 3 à 7 et 11.

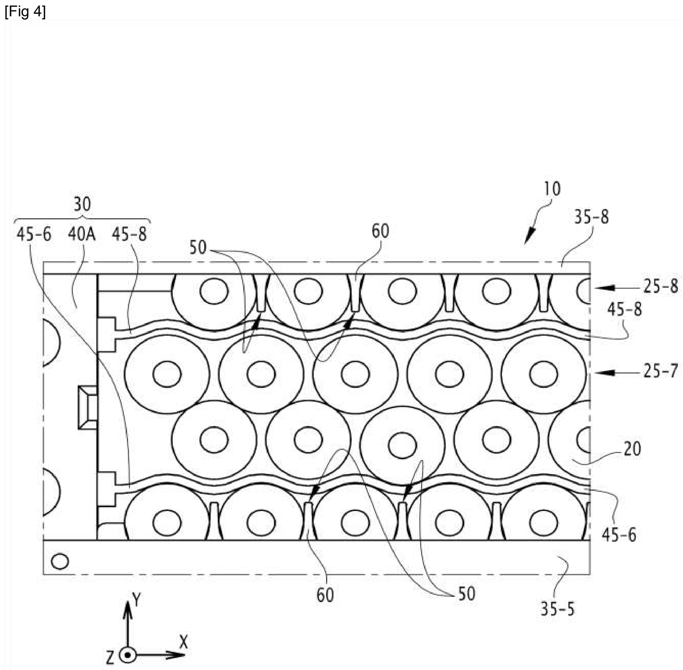

Le procédé d'assemblage 100 comprend :
a) une étape 105 de fourniture du boîtier 15 définissant un volume de réception des cellules électrochimiques entre les parois inférieure 38 et latérale 40 ;
b) une étape 110 de positionnement du ou des éléments longitudinaux de refroidissement 45 dans le volume de réception du boîtier 15, comprenant optionnellement la fixation amovible ou définitive du ou des éléments longitudinaux de refroidissement 45 ;
c) une étape 120 d'insertion des cellules électrochimiques 20 de manière à former les rangées 25, chaque rangée 25-i étant formée le long d'un élément longitudinal de refroidissement 45-i respectif avec un jeu Δ selon la direction transversale Y, comme représenté sur la figure 4 ;
d) une étape 130 de positionnement du ou des intercalaires de maintien 45 par translation selon la direction d'élévation Z, le cas échéant guidée par le dispositif d'aide au positionnement 75 comme représenté sur les figures 5 et 6, chaque rangée 25-i étant en contact serré avec l'élément longitudinal de refroidissement 45-i respectif à l'issue de l'étape de positionnement 130, l'intercalaire ayant supprimé le jeu Δ selon la direction transversale Y, comme visible sur la figure 7 ;
e) une étape 140 de blocage du ou des intercalaires de maintien 45 en translation selon la direction d'élévation Z relativement au boîtier 15, par exemple au moyen du couvercle 41 ou au moyen du dispositif de fixation amovible 70.

Dans un mode de réalisation particulier, le boîtier 15 est fourni avec les éléments longitudinaux de refroidissement 45 déjà assemblés dans le volume de réception du boîtier 15.

On constate donc que le procédé d'assemblage 100 selon l'invention permet un assemblage aisé du module de batterie 10 selon l'invention et un contrôle précis des éventuels jeux résiduels au niveau des rangées 25 à l'issue de l'assemblage.

Le démontage du module de batterie 10 pour sa maintenance ou son recyclage est aisé puisqu'il suffit de procéder à l'une ou plusieurs des étapes du procédé d'assemblage 100 dans l'ordre inverse.

Le module de batterie 10 peut être transporté aisément, notamment en l'absence de liquide de refroidissement, puisque celui-ci ne joue aucun rôle dans le maintien en place des cellules électrochimiques.

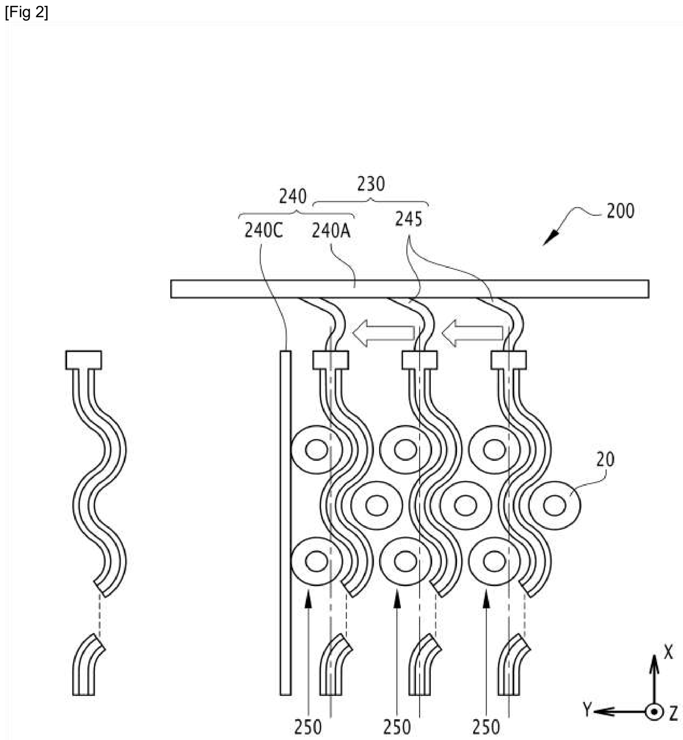

On comprendra mieux les avantages du procédé d'assemblage 100 selon l'invention en le comparant à un procédé d'assemblage d'un module de batterie 200 selon l'art antérieur décrit en référence à la figure 2.

Dans le procédé d'assemblage de l'art antérieur, des rangées 250 de cellules électrochimiques 20 sont assemblées successivement à partir d'une portion longitudinale 240C de paroi latérale 240 d'un boîtier du module de batterie 200.

Dans ce cas, une fois qu'une rangée 250-i est en place, un élément de refroidissement longitudinal 245-i respectif est positionné en contact avec la rangée 250-i, par translation selon la direction transversale Y, puis une nouvelle rangée 250-(i+1) est positionnée en contact avec l'élément de refroidissement longitudinal 245-i, à l'opposé de la rangée 250-i précédente selon la direction transversale Y, et ainsi de suite.

Les éléments longitudinaux 245-i sont ensuite connectés au reste du dispositif de refroidissement 230, par exemple à une portion de paroi 240A incluse dans ce dispositif de refroidissement 230.

On comprend donc que les éléments de refroidissement longitudinaux 245 ne peuvent pas être préassemblés sur le boîtier 15, et qu'il est difficile d'obtenir un entraxe a1, a2 constant entre ces éléments de refroidissement longitudinaux 245 du fait des tolérances sur la fabrication des différents éléments du module de batterie 200. De ce fait, il n'est pas possible de se passer de matériau de remplissage si les éléments de refroidissement longitudinaux ne sont pas gonflables.

## Revendications

1. Module de batterie électrochimique (10) comprenant :
- un boîtier (15),
- une pluralité de cellules électrochimiques (20) cylindriques s'étendant chacune selon une direction d'élévation (Z) entre deux bases opposées (20A), les cellules électrochimiques (20) étant disposées dans le boîtier (15) de manière à former au moins une rangée de cellules (25) s'étendant suivant une direction longitudinale (X) perpendiculaire à la direction d'élévation (Z),
- un dispositif de refroidissement (30) des cellules électrochimiques (20), et
- au moins un intercalaire de maintien (35) des cellules électrochimiques (20) s'étendant selon la direction longitudinale (X) et la direction d'élévation (Z),
au moins une rangée de cellules (25) étant placée selon une direction transversale (Y) perpendiculaire à la direction d'élévation (Z) entre :
- un élément longitudinal de refroidissement (45) respectif du dispositif de refroidissement (30), et
- un desdits au moins un intercalaire de maintien (35) respectif, placé en contact avec chacune des cellules électrochimiques (20) respectives de la rangée de cellules (25), de manière à maintenir chacune de ces cellules (20) en contact avec l'élément longitudinal de refroidissement (45) respectif,
ledit intercalaire de maintien (35) comprenant pour chaque rangée de cellules (25) respective une pluralité d'ailettes (50) s'étendant chacune selon la direction transversale (Y) entre deux cellules électrochimiques (20) respectives de la rangée de cellules (25), chaque ailette (50) présentant selon la direction d'élévation (Z) une portion inférieure (51) s'étendant en formant un biseau selon la direction d'élévation (Z) entre une base inférieure (55) de l'ailette (50) qui n'est pas en contact avec les cellules électrochimiques (20) respectives et une portion supérieure (52) de l'ailette (50) en contact de part et d'autre avec les cellules électrochimiques (20) respectives.

2. Module de batterie électrochimique (10) selon la revendication 1, dans lequel chaque rangée de cellules (25) est placée entre un élément longitudinal de refroidissement (45) respectif du dispositif de refroidissement et un intercalaire de maintien (35) respectif.

3. Module de batterie électrochimique (10) selon l'une quelconque des revendications précédentes, dans lequel les ailettes (50) s'étendent chacune selon la direction d'élévation (Z) sur une hauteur (H_{TOT}) au moins égale à la moitié d'une hauteur des cellules électrochimiques (20) respectives selon cette direction.

4. Module de batterie électrochimique (10) selon l'une quelconque des revendications précédentes, dans lequel ledit intercalaire de maintien (35) comprend au moins un élément de positionnement (75) apte à coulisser selon la direction d'élévation (Z) relativement à un élément de positionnement complémentaire (85) formé sur une paroi du boîtier (15).

5. Module de batterie électrochimique (10) selon l'une quelconque des revendications précédentes, dans lequel ledit intercalaire de maintien (35) est fixé de manière amovible sur chacune de deux parois du boîtier (40A, 40B) opposées selon la direction longitudinale (X).

6. Module de batterie électrochimique (10) selon l'une quelconque des revendications précédentes, dans lequel ledit intercalaire de maintien (35) est formé dans un matériau isolant électrique, et optionnellement isolant thermique.

7. Module de batterie électrochimique (10) selon l'une quelconque des revendications précédentes, dans lequel le dispositif de refroidissement (30) est configuré pour permettre la circulation d'un liquide de refroidissement.

8. Module de batterie électrochimique (10) selon la revendication 7, dans lequel le dispositif de refroidissement comprend une entrée de fluide de refroidissement et une sortie de fluide refroidissement pour l'alimentation de l'ensemble des éléments longitudinaux de refroidissement (45) en liquide de refroidissement.

9. Module de batterie électrochimique (10) selon l'une quelconque des revendications précédentes, dans lequel chaque élément longitudinal de refroidissement (45) est solidaire du boîtier (15).

10. Procédé d'assemblage d'un module de batterie électrochimique (10) selon l'une quelconque des revendications précédentes comprenant :
a) la fourniture (105) du boîtier (15) définissant un volume de réception des cellules électrochimiques (20) entre des parois inférieure (38) et latérale (40) ;
b) le positionnement (110) du ou des éléments longitudinaux de refroidissement (45) dans le volume de réception du boîtier (15) selon la direction longitudinale (X);
c) l'insertion (120) des cellules électrochimiques (20) de manière à former la ou les rangées de cellules (25), chaque rangée (25-i) étant formée le long d'un élément longitudinal de refroidissement (45-i) respectif avec un jeu (Δ) selon la direction transversale (Y) ;
d) le positionnement (130) du ou des intercalaires de maintien (35) par translation selon la direction d'élévation (Z), de façon à ce que ledit jeu (Δ) soit supprimé à l'issue de cette translation ;
e) le blocage (140) du ou des intercalaires de maintien (35) en translation selon la direction d'élévation (Z) relativement au boîtier (15).
